# EUROPÄISCHE PATENTSCHRIFT

(11) **EP 0 347 795 B1**
(45) Veröffentlichungstag und Bekanntmachung des Hinweises auf die Patenterteilung: **10.01.1996**
(21) Anmeldenummer: 89111087.6
(22) Anmeldetag: 19.06.1989
(51) Int. Cl.: B32B 15/14, E04D 5/10, D06N 5/00

(54) **Mehrschichtige Trägerbahn**
Multilayered sheet
Feuille multicouche

(30) Priorität: 22.06.1988 DE 3821011
(43) Veröffentlichungstag der Anmeldung: 27.12.1989
(73) Patentinhaber: HOECHST AKTIENGESELLSCHAFT, D-65926 Frankfurt am Main (DE)
(72) Erfinder: Weiter, Bertrand Claude, D-8900 Augsburg (DE); Wagner, Hans, Dr., D-8903 Bobingen (DE); Kaulich, Franz, D-8903 Bobingen (DE)

(56) Entgegenhaltungen:
- EP-A- 0 047 229
- EP-A- 0 247 797
- EP-A- 0 272 793
- DE-A- 2 827 136
- GB-A- 300 531
- GB-A- 1 073 974
- GB-A- 1 408 417

## Beschreibung

Die vorliegende Erfindung betrifft eine mehrschichtige Trägerbahn, die zwei Schichten aus textilen Flächengebilden und eine dazwischenliegende Metallschicht aufweist, und die sich insbesondere zur Herstellung von Dach- und Abdeckbahnen eignet.

Trägerbahnen aus einer Kombination einer textilen Bahn mit einer Metallfolie sind bereits bekannt und werden in großem Umfang zur Herstellung von bituminierten Dachbahnen benutzt, die nach DIN 4102 gegen Flugfeuer und strahlende Wärme widerstandsfähig sein müssen. Eine derartige Trägerbahn wird beispielsweise nach der DE-C-28 27 136 erhalten, indem auf einem Vlies aus schrumpffähigen Filamenten eine Metallfolie punktweise befestigt wird und anschließend der Schrumpf des Vlieses ausgelöst wird.
Auch aus der US-A-3 415 713 ist ein Dreischichtenmaterial bekannt, bestehend aus zwei Vliesschichten und einer dazwischenliegenden Schicht aus einer Vielzahl von kleinen Metallplättchen. Dieses Mehrschichtenmaterial ist jedoch nicht geeignet zur Herstellung von flugfeuerfesten Dachbahnen, da die eingelagerten Metallplättchen nicht mehr in der Lage sind, örtlich einwirkende Wärme wirkungsvoll abzuleiten.
Aus der DE-B-2 611 740 ist ein Teppichgrund bekannt, der aus einer textilen Unterschicht, einer Metallfolie und einer Deckschicht aus einem Faservlies besteht. Die drei Schichten werden von der Deckschicht her mit etwa 120 bis 190 Stichen pro cm² miteinander vernadelt. Als Vliesmaterial zur Herstellung dieses bekannten Mehrschichtenmaterials werden Stapelfaservliese mit einer Faserlänge von 12 bis 150 mm verwendet und die Deckschicht und textile Unterschicht dieser bekannten Mehrschichtenbahn weisen etwa gleiches Flächengewicht auf. Nach den Angaben dieser Druckschrift macht die Metallfolie den so hergestellten Teppichgrund schwer entflammbar und vermeidet elektrostatische Aufladungen. Überraschenderweise zeigt sich, daß auch diese bekannte Mehrschichtenbahn zur Herstellung von Bitumenbahnen nicht geeignet ist, da sie deren Brandverhalten nicht verbessert, sondern im Gegenteil verschlechtert.

Die zur Herstellung von Bitumenbahnen bekannten Zweischichtenmaterialien aus einer Textilschicht und einer Metallfolie haben den Nachteil, daß sie beim Transport zum Weiterverarbeiter und bei der Beschichtung mit Bitumen vorsichtiger gehandhabt werden müssen als einfache Vliesstoffbahnen, um die dünne Metallfolie nicht zu beschädigen. Weiterhin ergeben sich des öfteren Schwierigkeiten mit der Bitumenhaftung, sowohl bei der Bitumenimprägnierung als auch später bei der Verlegung auf den abzudeckenden Flächen.

Gegenstand der vorliegenden Erfindung ist nun eine Trägerbahn, insbesondere zur Herstellung von bituminierten Dachbahnen, die die Nachteile des Standes der Technik nicht aufweist, die leichter zu handhaben ist, eine wesentlich unempfindlichere Oberfläche hat und die sich durch eine wesentlich günstigere Bitumenhaftung auszeichnet.

Die erfindungsgemäße mehrschichtige Trägerbahn ist dadurch gekennzeichnet, daß
a) das Flächengewicht des stärkeren textilen Flächengebildes als Tragschicht 50 bis 90 %,
b) das Flächengewicht der Metallfolie 5 bis 25 % und
c) das Flächengewicht des schwächeren textilen Flächengebildes als Deckschicht 5 bis 25 %
des Gesamtflächengewichts der Trägerbahn beträgt.

Die drei Schichten a) bis c) haben zusammen ein Flächengewicht von 100 bis 600, vorzugsweise 150 bis 400 g/m².

Die in der erfindungsgemäßen Trägerbahn enthaltenen textilen Flächengebilde können Gewebe, Gewirke, Gelege oder vorzugsweise Vliesstoffe sein. Insbesondere ist es bevorzugt, daß mindestens eines der textilen Flächengebilde aus einem Vliesstoff besteht. Besonders bevorzugt sind solche erfindungsgemäßen Trägerbahnen, bei denen beide textilen Flächengebilde Vliesstoffe sind.

Als Fasermaterial für die textilen Flächengebilde kommen im Prinzip natürliche Fasern, wie z.B. Cellulose oder Wollfasern oder auch Synthesefasern mit einem Schmelzpunkt von mindestens 180 bis 200°C in Betracht. Bevorzugt sind Synthesefasern aus Polyamid, Polyacrylnitril und insbesondere aus Polyestern. Sowohl bei Polyamid-Synthesefasern als auch bei Polyester-Synthesefasern werden vorzugsweise solche Typen gewählt, die einen möglichst hohen Schmelzpunkt haben, d.h. daß bei Polyamidfasern mit besonderem Vorteil z.B. Aramidfasern eingesetzt werden können. Auch bei den Polyesterfasern werden solche bevorzugt, die aus Polyestern mit einem hohen Anteil aromatischer Bausteine bestehen. Besonders bevorzugt sind Filamente aus Polyethylenterephthalat, insbesondere von solchem Ethylenterephthalat, das durch Zusatz bekannter flammhemmender Mittel wie z.B. Sb₂O₃ oder durch Einbau die Brennbarkeit herabsetzender Kettenbausteine modifiziert worden ist. Bekannte, die Brennbarkeit des Polymers herabsetzende Kettenbausteine sind beispielsweise phosphorhaltige, von Diolen, Dicarbonsäuren oder Hydroxycarbonsäuren abgeleitete Bausteine oder Säuren des Phosphors und deren Derivate, insbesondere Kettenbausteine, die sich von Phosphon- und Phosphinsäuren ableiten. Polyester, die in dieser Weise durch phosphorhaltige Bausteine schwerbrennbar gemacht wurden, sind beispielsweise in der DE-B- 12 43 819 und den DE-OSen 15 20 079 und 15 95 598 beschrieben. Besonders bevorzugte schwer brennbare Polyester sind z.B. die der DE-C- 23 46 787, insbesondere solche, die einen Kettenbaustein der Formel 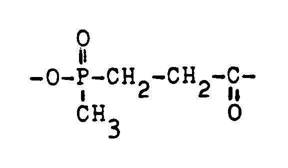
aufweisen.

Die Synthesefasern können entweder in Form von Endlosfilamenten oder aber in Form von Stapelfasern in den textilen Flächengebilden der erfindungsgemäßen Trägerbahn enthalten sein. Bevorzugt sind Endlosfasern und dementsprechend sind sogenannte Spinnvliese besonders bevorzugte textile Flächengebilde, zu deren Herstellung die frisch ersponnenen Filamente direkt in idealer Wirrlage auf einer bewegten Unterlage abgelegt werden.

Ein wesentliches Kriterium der erfindungsgemäßen Trägerbahn ist die Gewichtsverteilung in den einzelnen Schichten. Das stärkere textile Flächengebilde, die Tragschicht a) weist 50 bis 90 %, vorzugsweise 60 bis 80 %, des Gesamtgewichts der Trägerbahn auf. Dementsprechend werden vorzugsweise Tragschichten mit einem Flächengewicht von 50 bis 540, vorzugsweise 90 bis 320 g/m² eingesetzt.

Das Flächengewicht der Metallfolie b) wird möglichst gering gewählt und liegt bei 5 bis 25 % des Gesamtflächengewichts der Trägerbahn. Dementsprechend werden Metallfolien mit einem Flächengewicht von 5 bis 150, vorzugsweise 7,5 bis 100 g/m² eingesetzt.

Das schwächere textile Flächengebilde der erfindungsgemäßen Trägerbahn, die Deckschicht c), weist ein Flächengewicht von etwa 5 bis 25 %, vorzugsweise 10 bis 15 % des Gesamtflächengewichtes der erfindungsgemäßen Trägerbahn auf. Dementsprechend werden für die Deckschicht textile Flächengebilde mit einem Gewicht von 5 bis 120, vorzugsweise 15 bis 60 g/m² eingesetzt.

Die drei Schichten a) bis c) werden in an sich bekannter Weise z.B. durch vollflächiges oder partielles Verkleben oder, vorzugsweise, durch Nadeln, zweckmäßigerweise mit einer Stichzahl von 30 bis 100 Stichen pro cm² , miteinander verbunden. Die Verbindung durch Nadeln ist insbesondere dann bevorzugt, wenn mindestens eines der textilen Flächengebilde der erfindungsgemäßen Trägerbahn aus einem Vliesstoff besteht. In diesem Fall stammen die den Zusammenhalt des Mehrschichtenmaterials bewirkende Verbindungsfilamente aus der Vliesstoffschicht. Besonders bevorzugt ist es in diesem Fall, wenn das stärkere textile Flächengebilde, die Tragschicht, aus dem Vliesstoff besteht und die Verbindungsfilamente sich dementsprechend aus der Tragschicht durch das gesamte Mehrschichtenmaterial erstrecken.

Die textilen Flächengebilde, insbesondere die Vliesstoffe der erfindungsgemäßen Trägerbahn können zusätzlich noch durch bekannte Bindemittel gebunden sein. Solche Bindemittel sind beispielsweise Kunstharzdispersionen, insbesondere Dispersionen von Duroplasten oder Polymerlatices.

Die Herstellung der erfindungsgemäßen Trägerbahn erfolgt in an sich bekannter Weise indem die Materialien der drei Schichten, nämlich die Tragschicht, die Metallfolie und die Deckschicht zusammengeführt und entweder partiell oder vollflächig durch einen aufgebrachten Kleber miteinander verklebt werden, oder indem sie nach dem Zusammenführen mit 30 bis 100 Stichen pro cm² miteinander vernadelt werden. Das Vernadeln ist das bevorzugte Verfahren, wenn in bevorzugter Weise mindestens eines der textilen Flächengebilde ein Vliesstoff ist. Bei der besonders bevorzugten Verwendung von Vliesstoffen sowohl für die Tragschicht als auch für die Deckschicht, erfolgt die Vernadelung von der Tragschicht her, so daß Filamente aus der Tragschicht durch das gesamte Dreischichtenmaterial hindurchgezogen werden und als Verbindungsfilamente dessen Zusammenhalt bewirken. Die Stärke der mit der Metallfolie zusammengeführten textilen Flächengebilde wird nach den oben angegebenen Kriterien gewählt.

Nach dem Verbinden der drei Schichten durch Kleben oder Nadeln kann gegebenenfalls noch eine zusätzliche Verfestigung der Textilmaterialien, insbesondere der Vliesmaterialien, durch Binden mit an sich bekannten Bindemitteln erfolgen. Diese Bindemittel, z.B. Dispersionen aus Kunstharzen, insbesondere aus Duroplasten, oder aber Latexdispersionen können in an sich bekannter Weise auf die Flächengebilde aufgebracht werden, z.B. durch Aufstreichen, Tauchen oder Aufsprühen.

Die Verbindung der zusammengeführten Schichten der erfindungsgemäßen mehrschichtigen Trägerbahn kann auch beispielsweise durch Einbringen zusätzlicher Schichten aus Schmelzklebern, die beispielsweise aus einer aus Klebefasern gefertigten Raschelware bestehen, erfolgen. Im Falle der Verwendung eines Schmelzklebers ist natürlich dessen Schmelzpunkt so einzustellen, daß er dem Schmelzpunkt der Filamente der textilen Flächengebilde angepaßt ist. Das bedeutet, daß der Schmelzkleber mindestens 20 bis 30°C unterhalb des Schmelzpunktes dieser Filamente erweichen muß um die Verbindung zu bewirken.

Die Deckschicht der erfindungsgemäßen Trägerbahn verhindert Beschädigungen der Metallfolie während des Aufwickelns, beim Verpacken und während des Transports. Dadurch bleibt die Metallfolie über die gesamte Fläche der Trägerbahn unbeschädigt und somit als Brandschutzbahn wirksam.

Die erfindungsgemäße Trägerbahn verbessert durch ihre Deckschicht auch deutlich die Bitumenhaftung, wie durch Messung der Schälkraft nachgewiesen werden kann. Die verbesserte Bitumenhaftung führt darüber hinaus zu einer besseren Wärmestandfestigkeit und einem nochmals verbesserten Kaltbiegeverhalten.

Erfolgt der Einbau der bituminierten Dachbahn mit obenliegender Deckschicht, dann schützt die Metallfolie die Tragschicht vor Flugfeuer und strahlender Wärme. Erfolgt der Einbau der Dachbahn mit obenliegender Tragschicht, dann schützt die Metallfolie die Tragschicht der Dachbahn vor Übermäßiger Hitzeeinwirkung bei unsachgemäßer Verarbeitung.

## Patentansprüche

1. Mehrschichtige Trägerbahn aus einer textilen Tragschicht, einer damit verbundenen Metallfolie, und einer damit verbundenen textilen Deckschicht, dadurch gekennzeichnet, daß
das Flächengewicht des stärkeren textilen Flächengebildes als Tragschicht 50 bis 90 %,
das Flächengewicht der Metallfolie 5 bis 25 % und
das Flächengewicht des schwächeren textilen Flächengebildes als Deckschicht 5 bis 25 %
des Gesamtflächengewichts der Trägerbahn beträgt.

2. Trägerbahn gemäß Anspruch 1, dadurch gekennzeichnet, daß sie ein Gesamtflächengewicht von 100 bis 600 g/m² hat.

3. Trägerbahn gemäß mindestens einem der Ansprüche 1 und 2, dadurch gekennzeichnet, daß mindestens eine der textilen Schichten aus einem Vliesstoff besteht.

4. Trägerbahn gemäß mindestens einem der Ansprüche 1 bis 3, dadurch gekennzeichnet, daß die textilen Schichten aus Polyesterfilamenten oder - Fasern bestehen.

5. Trägerbahn gemäß mindestens einem der Ansprüche 1 bis 4, dadurch gekennzeichnet, daß die Schichten a) bis c) in an sich bekannter Weise durch vollflächiges oder partielles Verkleben oder durch Nadeln mit 30 bis 100 Stichen pro cm² miteinander verbunden sind.

6. Trägerbahn gemäß mindestens einem der Ansprüche 1 bis 5, dadurch gekennzeichnet, daß die textilen Flächenmaterialien der Trägerbahn zusätzlich durch bekannter Binder verfestigt sind.

7. Verfahren zur Herstellung einer Trägerbahn aus textilen Schichten und einer Metallfolie, dadurch gekennzeichnet, daß
a) ein stärkeres textiles Flächengebilde als Tragschicht, dessen Flächengewicht 50 bis 90 %,
b) eine Metallfolie deren Flächengewicht 5 bis 25 % und
c) ein schwächeres textiles Flächengebilde als Deckschicht dessen Flächengewicht 5 bis 25 % des Gesamtflächengewichts der Trägerbahn beträgt,
zusammengeführt und in an sich bekannter Weise durch Verkleben oder Vernadeln miteinander verbunden werden.

8. Verfahren gemäß Anspruch 7, dadurch gekennzeichnet, daß die Summe der Flächengewichte der zusammengeführten Flächengebilde 100 bis 600 g/m² beträgt.

9. Verfahren gemäß mindestens einem der Ansprüche 7 und 8, dadurch gekennzeichnet, daß die zusammengeführten Flächengebilde miteinander vernadelt werden und die Nadelung von der Tragschicht aus erfolgt.

10. Verfahren nach mindestens einem der Ansprüche 7 bis 9, dadurch gekennzeichnet, daß die Nadelung mit 30 bis 100 Stichen je cm² erfolgt.

11. Verfahren gemäß mindestens einem der Ansprüche 7 bis 10, dadurch gekennzeichnet, daß die dreischichtige Trägerbahn nach dem Verbinden der drei Schichten noch mit einem bekannten Bindemittel beaufschlagt und gebunden wird.

12. Verwendung der mehrschichtigen Trägerbahn des Anspruchs 1 zur Herstellung von bituminierten Dach- oder Abdeckbahnen.

13. Dach- oder Abdeckbahn, dadurch gekennzeichnet, daß sie eine bituminierte, mehrschichtige Trägerbahn des Anspruchs 1 aufweist.

## Claims

1. A multilayered base web comprising a textile support layer, a connected metal foil and a connected textile top layer,
characterized in that
the basis weight of the thicker textile sheet material acting as support layer is 50 to 90%,
the basis weight of the metal foil 5 to 25%, and
the basis weight of the thinner textile sheet material acting as top layer is 5 to 25%
of the total basis weight of the base web.

2. The base web of claim 1, characterized in that it has a total basis weight of 100 to 600 g/m².

3. The base web of at least one of claims 1 and 2, characterized in that at least one of the textile layers consists of a nonwoven.

4. The base web of at least one of claims 1 to 3, characterized in that the textile layers consist of polyester filaments or fibers.

5. The base web of at least one of claims 1 to 4, characterized in that the layers a) to c) are connected together in a conventional manner by complete or partial adhering or by needling with 30 to 100 stitches per cm².

6. The base web of at least one of claims 1 to 5, characterized in that the textile sheet materials of the base web have been additionally consolidated by means of known binders.

7. A process for producing a base web from textile layers and a metal foil, characterized in that
a) a relatively thick textile sheet material as support layer, whose basis weight is 50 to 90%,
b) a metal foil whose basis weight is 5 to 25%, and
c) a thinner textile sheet material as top layer, whose basis weight is 5 to 25% of the total basis weight of the base web,
are brought together and conventionally connected together by adhering or needling.

8. The process of claim 7, characterized in that the sum of the basis weights of the sheet materials brought together is 100 to 600 g/m².

9. The process of at least one of claims 7 and 8, characterized in that the brought-together sheet materials are needled together and the needling is effected from the support layer side.

10. The process of at least one of claims 7 to 9, characterized in that the needling is effected with 30 to 100 stitches per cm².

11. The process of at least one of claims 7 to 10, characterized in that, after the three layers have been connected together, the three-layered base web is additionally treated and bonded with a known binder.

12. The use of the multilayered base web of claim 1 for producing bituminized roofing or covering membranes.

13. A roofing or covering membrane, characterized in that it comprises a bituminized, multilayered base web of claim 1.

## Revendications

1. Feuille de support multicouche composée d'une couche de support textile, d'une feuille métallique assemblée à celle-ci et d'une couche de surface textile reliée avec celle-ci, caractérisée en ce que
le poids surfacique du produit plat textile plus fort, en tant que couche de support, représente de 50 à 90 %,
le poids surfacique de la feuille métallique est de 5 à 25 %, et
le poids surfacique du produit textile plat plus faible, utilisé comme couche superficielle, est de 5 à 25 % du poids total de la feuille support.

2. Feuille de support selon la revendication 1, caractérisée en ce qu'elle a un poids surfacique total de 100 à 600 g/m².

3. Feuille de support selon au moins l'une des revendications 1 et 2, caractérisée en ce qu'au moins une des couches textiles est un tissu non tissé.

4. Feuille de support selon au moins l'une des revendications 1 à 3, caractérisée en ce que les couches textiles sont constituées de fibres ou de filaments polyester.

5. Feuille de support selon au moins l'une des revendications 1 à 4, caractérisée en ce que les couches a) à c) sont assemblées de façon connue en soi, par collage sur la totalité de la surface ou par collage partiel ou par aiguilletage avec 30 à 100 points par cm².

6. Feuille de support selon au moins l'une des revendications 1 à 5, caractérisée en ce que les matières textiles plates de la feuille de support sont renforcées de façon supplémentaire par un liant connu.

7. Procédé pour la préparation d'une feuille support constituée de couches textiles et d'une feuille métallique caractérisée en ce que
a) un produit textile plat plus fort, en tant que couche de support, dont le poids surfacique représente de 50 à 90 %,
b) une feuille métallique dont le poids surfacique représente de 5 à 25 % et
c) un produit textile plat plus lourd, en tant que couche superficielle, dont le poids surfacique représente de 5 à 25 % du poids total de la feuille de support,
sont réunies et reliées l'une à l'autre de façon connue en soi par collage ou par aiguilletage.

8. Procédé selon la revendication 7, caractérisé en ce que la somme des poids surfaciques des produits plats réunis est de 100 à 600 g/m².

9. Procédé selon au moins l'une des revendications 7 et 8, caractérisé en ce que les produits plats réunis sont aiguilletés l'un à l'autre et que l'aiguilletage part de la couche de support.

10. Procédé selon au moins l'une des revendications 7 à 9, caractérisé en ce que l'aiguilletage est effectué avec 30 à 100 points par cm².

11. Procédé selon au moins l'une des revendications 7 et 10, caractérisé en ce que la feuille de support à trois couches, après avoir assemblé les trois couches, est chargée d'un lient connu et reliée à l'aide de celui-ci.

12. Utilisation de la feuille de support multicouche de la revendication 1 pour la préparation de feuilles bituminées de couverture ou de toiture.

13. Feuille de toiture ou de couverture caractérisée en ce qu'elle présente une feuille de support multicouche bituminée de la revendication 1.
